# EUROPÄISCHE PATENTANMELDUNG

(11) **EP 4 037 118 A1**
(43) Veröffentlichungstag der Anmeldung: **03.08.2022**
(21) Anmeldenummer: 22154225.1
(22) Anmeldetag: 31.01.2022
(51) Int. Cl.: H02G 1/02, B61H 7/12, B61H 9/02, F16D 63/00, B66D 5/16, B60T 1/14

(54) **LEITUNGSFAHRWAGEN FÜR EINE HOCHSPANNUNGSLEITUNG, SOWIE EINE LEITUNGSBREMSE FÜR EINEN LEITUNGSFAHRWAGEN**

(30) Priorität: 02.02.2021 DE 102021102375
(71) Anmelder: Sepa-Tech GmbH & Co. KG, 78234 Welschingen (DE)
(72) Erfinder: Pagliazzo, Francesco, 78234 Engen (DE)
(74) Vertreter: Patentanwälte und Rechtsanwalt Weiß, Arat & Partner mbB

(57) **Zusammenfassung**

Die Erfindung betrifft einen Leitungsfahrwagen (1) für eine Hochspannungsleitung mit einem Rahmen (2), wobei der Rahmen (2) einen Antrieb (4) aufweist und der Antrieb (4) mit einer Leitungsantriebsrolle (6.1, 6.2) zusammenwirkt, wobei die Leitungsantriebsrolle (6.1, 6.2) an einer Leitungsantriebseinheit (5.1, 5.2) umfasst ist, wobei die Leitungsantriebseinheit (5.1, 5.2) eine Leitungsbremse (7) aufweist, wobei die Leitungsbremse (7) aus einer Scherenkonstruktion (8) mit zwei zueinander reversibel beweglich angeordneten Haltern (9, 10) besteht, wobei jeder der Halter (9, 10) jeweils eine Bremsbacke (11, 12) aufweist, wobei mittels des Antriebs (4) durch eine Entweder/Oder-Schaltung entweder die Leitungsbremse (7) aktiviert ist oder die Leitungsantriebsrolle (6.1, 6.2) angetrieben ist.

## Beschreibung

### Technisches Gebiet

Die Erfindung betrifft einen Leitungsfahrwagen für eine Hochspanungsleitung nach dem Oberbegriff des Anspruchs 1 und eine Bremse für Leitungsfahrwagen nach dem Oberbegriff des Anspruchs 13.

### Stand der Technik

Derartige Leitungsfahrwagen für eine Hochspannungsleitung oder Freileitung sind bereits in vielfältiger Form und Ausgestaltung bekannt und gebräuchlich. So wird beispielsweise in der DE 2 107 707 A ein Freileitungs-Fahrwagen offenbart, bei dem mindestens drei Laufräder vorgesehen sind und jedes zusammen mit seiner Achse zwischen einer ein Tragen des Wagens gestattenden ersten Stellung und einer ein Vorbeiführen an einem mit dem Seil verbundenen Körper gestattenden zweiten Stellung bewegbar mit dem Gestell verbunden ist. Dabei wird hier die Bremswirkung durch das Festlegen der kabelaufnehmenden Räder erreicht.

Weiter wird auf die DE 27 13 485 A1 verwiesen. Dort ist ein weiterer Freileitungs-Fahrwagen mit einem einen korbtragenden Gestell und wenigstens vier auf mindestens einem Seil auflegbaren Rollen offenbart, wobei wenigstens zwei der Rollen in Fahrtrichtung im Abstand vor bzw. hinter den übrigen Rollen befindlich sind, wobei die sich vor bzw. hinter den übrigen, hier um eine vertikale Achse schwenkbaren Rollen befindenden Stützräder bildenden Rollen je an einem Auslegerarm um dessen Längsachse schwenkbar und in horizontaler Lage ihrer Drehachse verriegelbar angeordnet sind. Dabei findet die verriegelbare Anordnung in der Weise statt, dass die Auslegerarme mit je einem sich vom Korb zu den übrigen Rollen erstreckenden Holm des Gestells um dessen Längsachse drehbar und in vorgegebener Drehstellung feststellbare Verbindung vorhanden ist.

### Aufgabe der Erfindung

Die Aufgabe der vorliegenden Erfindung ist es die Nachteile aus dem Stand der Technik zu überwinden. Dabei soll ein Leitungsfahrwagen für eine Hochspannungsleitung oder Freileitung zur Verfügung gestellt werden, welche sich hier um möglichst fehlerfrei bedient werden kann. Insbesondere soll der Leitungsfahrwagen durch eine Bremseinrichtung bei Bedarf an der Leitung festgelegt werden können. Hierbei sollen insbesondere anwenderspezifische Fehler vermieden und Zeit gespart werden.

### Lösung der Aufgabe

Zur Lösung der Aufgabe führen die Merkmale nach den Ansprüchen 1, 2 und 13.

Vorteilhafte Ausgestaltungen sind in den Unteransprüchen beschrieben.

Ein erfindungsgemäßer Leitungsfahrwagen dient dem Einsatz bei Arbeiten an einer Hochspannungsleitung oder Freileitung. Dabei handelt es sich um Leitungen zur Fernübertragung von elektrischer Energie mit elektrischer Spannung. Solche Hochspannungsleitungen oder Freileitungen enthalten in der Regel mehrere (mindestens drei) dicke und mit hohen Stromstärken belastbare Leiterseile. Typische Leiterseile bestehen aus Aluminium mit einer Stahl-Seele. Sie können dabei beispielsweise eine Querschnittsfläche von 40 Quadratmillimeter aufweisen und mit bis zu 2 kA belastet werden.

Weiter werden beispielsweise nicht nur einfache Leiterseile, sondern Bündelleiter bestehend aus typsicherweise drei bis sechs Leitern verwendet.

Ein solcher Leitungsfahrwagen weist einen Rahmen auf. Der Rahmen wiederum weist einen Antrieb auf und der Antrieb dient der Fortbewegung des Leitungsfahrwagens an der Hochspannungsleitung. Dazu treibt der Antrieb eine Leitungsantriebsrolle an. Der Antrieb wirkt mit der Leitungsantriebsrolle zusammen, in dem er entsprechend eine vorhandene Kraft auf die Leitungsantriebsrolle überträgt und damit die Leitungsantriebsrolle zur Rotation veranlasst.

Dazu ist die Leitungsantriebsrolle einer Leitungsantriebseinheit umfasst. Die Leitungsantriebseinheit besteht dabei aus einer Stabstruktur, auf welcher die Leitungsantriebsolle derart angeordnet ist, dass die Leitungsantriebsrolle entsprechend rotieren kann. Auch umfasst die Leitungsantriebseinheit die Leitungsbremse. Die Leitungsbremse wird nach dem Stand der Technik im Augenblick manuell betätigt und gelöst. Im Rahmen der Erfindung wird die Leitungsbremse verbessert.

Die Leitungsbremse besteht dabei aus einer Scherenkonstruktion, welche über eine Halterung an der Leitungsantriebseinheit angebracht ist. Die Scherenkonstruktion wiederum besteht aus zwei zueinander reversibel beweglich angeordneten Haltern. Die Halter weisen einends jeweils eine Bremsbacke auf. Die Bremsbacken sind dabei derart angeordnet, dass sie bei einer Zueinanderbewegung die Hochspannungsleitung, welche sich in Arbeitslage zwischen den beiden Bremsbacken befindet, entweder festlegen und somit den Leitungsfahrwagen an der Hochspannungsleitung festlegen oder freigeben, so dass der Leitungsfahrwagen über den Antrieb und die angetriebene Leitungsantriebsrolle an der Hochspannungsleitung bewegt werden kann.

Erfindungsgemäß wird mittels des Antriebs durch eine Entweder/Oder-Schaltung entweder die Leitungsbremse aktiviert oder die Leitungsantriebsolle angetrieben. Das bedeutet, dass ein und derselbe Antrieb entweder für die eine Aufgabe oder für andere Aufgabe genutzt wird. Dies hat den Vorteil, dass solange der Antrieb vom Nutzer für die Fortbewegung genutzt wird, die Leitungsantriebsrolle angetrieben ist. Sobald aber der Nutzer keine weitere Fortbewegung wünscht wird er den Antrieb zur Fortbewegung deaktiviert.

Der Antrieb wird aber nun die aufgebrachte Kraft oder einen Teil der aufgebrachten Kraft zur Aktivierung der Leitungsbremse nutzen. Für den Anwender hat dies den Vorteil, dass er bei einer Fortbewegung des Leitungsfahrwagens mittels eines Hebels entweder in die eine oder die andere Richtung eine Fortbewegung durch entsprechende Betätigung des Hebels erreichen kann und sobald er den Hebel loslässt, wird der Hebel in eine Mittellage zurückgehen und der Antrieb wird die Leitungsbremse derart aktivieren, dass die Scherenkonstruktion schließt und die beiden zueinander beweglich angeordneten Halter zueinander bewegt werden und die Bremsbacken die Hochspur der Hochspannungsleitung ranfahren und die Hochspannungsleitung festlegen. Auf diese Weise wird eine Fortbewegung des Leitungsfahrwagens ohne ausdrückliche Vorgabe des Anwenders vermieden.

Das wiederum bedeutet, dass bspw. bei händischen Bremsmanövern bisher aufgetretene Zeiträume, in welchen der Leitungsfahrwagen unkontrolliert weiterrollen konnte vermieden werden.

Durch die Entweder/Oder-Schaltung wird vorteilhaft erreicht, dass sobald die Leitungsbremse deaktiviert wird, wiederum die Hochspannungsleitung freigegeben wird und die Leitungsantriebsrolle entweder in die eine oder andere Richtung bewegt werden kann. Die eine oder ander Richtung bedeutet hierbei entlang der Hochspannungsleitung in die eine oder andere Richtung.

Weiter ist ein Sonderschalter vorgesehen, welche die Leitungsbremse und die Leitungsantriebsrolle deaktivieren kann. Dieser Sonderschalter ist bspw. hilfreich bei Beginn der Arbeiten zum Anbringen des Leitungsfahrwagens auf der Hochspannungsleitung oder am Ende der Arbeiten beim Abbau des Leitungsfahrwagens von der Hochspannungsleitung.

Weiter ist vorgesehen, dass durch einen Kraftspeicher die Leitungsbremse deaktivierbar ist. Die Deaktivierung mittels des Kraftspeichers soll die Rückstellung der reversibel beweglich angeordneten Halter in eine nicht die Hochspannungsleitung festlegende Position ermöglichen. Dabei kann es sich um jede Art des Kraftspeichers handeln, welche durch den Antrieb komprimiert die Scherenkonstruktion schließt und die Kraft zur Ausdehnung freigibt, sobald die Kraft des Antrieb entfällt. Es kann sich um eine Zug-/Druckfeder, Gummipuffer etc sein.

Der Antrieb kann dabei ein elektrischer Antrieb, ein hydraulischer Antrieb, ein pneumatischer Antrieb oder ein herkömmlicher Verbrennungsmotor mit hydraulischer, pneumatischer oder elektrischer Translation für die Leitungsbremse sein. Translation bedeutet hierbei, dass ein Verbrennungsmotor bspw. die hydraulische Energie oder die pneumatische Energie oder die elektrische Energie zur Betätigung der Leitungsbremse liefert.

In einem bevorzugten Ausführungsbeispiel weist der Leitungsfahrwagen an seinem Rahmen mindestens zwei Leitungsantriebseinheiten auf, wobei die erste Leitungsantriebseinheit die erste Leitungsbremse und die zweite Leitungsantriebseinheit die zweite Leitungsbremse umfassen. Dabei sind die beiden Leitungsantriebseinheiten derart an dem Rahmen angeordnet, dass eine Hochspannungsleitung zunächst bspw. durch die erste Leistungsantriebseinheit an die erste Leitungsbremse verläuft und anschließend durch die Erstreckung des Rahmens läuft, um dann durch die zweite Leitungsantriebseinheit und die zweite Leitungsbremse wieder herauszugleiten. Dies führt zu einer zusätzlichen Stabilisierung des Leitungsfahrwagens. Außerdem ermöglicht es ein besseres Festlegen des Leitungsfahrwagens und dessen Rahmens an der Hochspannungsleitung. Es ist auch denkbar, dass die erste Leitungsbremse an der Hochspannungsleitung bremsend wirkt und die zweite Leitungsbremse an einer parallel verlaufenden Hochspannungsleitung bremsend wirkt.

Weiter ist es vorgesehen, dass die erste Leitungsbremse relativ zur zweiten Leitungsbremse zeitverzögert aktivierbar und deaktivierbar ist. Das bedeutet im Einzelnen, dass sobald die erste Leitungsbremse aktiviert ist, die zweite Leitungsbremse zeitverzögert, also nach wenigen Augenblicken ebenfalls aktiviert ist. In gleicher Weise ist es auch bei der Deaktivierung. Sobald die erste Leitungsbremse deaktiviert ist, wird zeitverzögert, also nach wenigen Augenblicken oder wenigen Sekunden die zweite Leitungsbremse ebenfalls deaktiviert. Das hat den Vorteil, dass bei der Aktivierung oder Deaktivierung der Leitungsbremse der Leitungsfahrwagen tatsächlich bis zum Loslaufen gebremst wird und bei der Aktivierung der Leitungsbremse die erste Leitungsbremse schon greift, wenn der Leitungsfahrwagen vielleicht noch Schwung aus der Fortbewegung hat.

In gleicher Weise ist es auch vorgesehen, dass beide Leitungsbremsen zeitgleich aktivierbar und deaktivierbar sind.

Hier wiederum ist der Vorteil, dass keine den Vortrieb entgegenwirkende Leitungsbremse vorhanden ist, sobald der Anwender den Leitungsfahrwagen in Fahrt versetzt, und eine größere Bremskraft entsteht, wenn er den Vortrieb des Leitungsfahrwagens wegnimmt.

Normalerweise weist die Leitungsantriebseinheit mindestens zwei Leitungsantriebsrollen auf. Dies verleiht der Gesamtkonstruktion des Leitungsfahrwagens zusätzliche Stabilität.

Die Leitungsbremse ist dabei entweder an einer der Leitungsantriebsrollen der Leitungsantriebseinheit vorsehbar oder an beiden Leitungsantriebsrollen der Leitungsantriebseinheit. Dies ist Auslegungssache des Erstellers bzw. des Nutzers.

Die Bremsbacken sind zumindest teilweise aus Gummi, Kunststoff oder Holz hergestellt. Teilweise bedeutet, dass die Bremsbacken regelmäßig zumindest eine Metallaufnahme aufweisen, in welche dann das Bremspad bzw. die Bremsbacken aus Gummi, Kunststoff oder Holz eingebettet und befestigt sind.

Der Leitungsfahrwagen weist außerdem üblicherweise an seinem Rahmen einen Boden auf, auf welchen der Anweder des Leitungsfahrwagens stehen oder ggf. sitzen kann. Der Boden wiederum ist mit einem Fahrgastkorb umfangen. Dies dient der zusätlichen Sicherheit des Leitungsfahrwagens.

Auch weist die Leitungsantriebseinheit auf der zu einer Mitte des Fahrgastkorbs weisenden Seite eine Plexiglas-Schutzeinrichtung auf, um zusätzlichen Schutz für die im Fahrgastkorb befindlichen Nutzer zu gewährleisten. Auch ist die Leitungsantriebseinheit einends von dem Rahmen wegklappbar. Das dient der besseren Handhabbarkeit des Leitungsfahrwagens im Einsatz. Zum Überfahren von Hindernissen wird zunächst die zuerst auf das Hindernis treffende Leitungsantriebseinheit von dem Rahmen des Fahrgastkorbs weggeklappt, um mittels der zweiten Leitungsantriebseinheit das Hindernis zu umfahren. Anschließend wird die erste Leitungsantriebseinheit zurückgeklappt, sodass die erste Leitungsantriebseinheit den Fahrgastkorb weiterführt, die zweite Leitungsantriebseinheit weggeklappt wird, so dass auch die zweite Leitungsantriebseinheit das Hindernis passieren kann und anschließend wieder zurückgeklappt werden kann, um die Fahrt des Leitungsfahrwagens fortzusetzen. In diesem Zusammenhang ist die erfindungsgemäße Nutzung der Leitungsbremse von besonderem Vorteil. Gerade beim Überfahren der Hindernisse verringert es die Gefahr von ungewollten, unkontrollierten Bewegungen des Leitungsfahrwagens, wenn die erste Leitungbremse beispielsweise durch den oben beschriebenen Sonderschalter gelöst wird, um die Leitungsantriebseinheit aufzuklappen. Währenddessen kann durch die zweite Leitungsbremse der Leitungsfahrwagen gesichert werden.

Weiter ist Schutz begehrt für eine Leitungsbremse für den Leitungsfahrwagen. Dabei wird eigenständiger Schutz für die Leitungsbremse zum Anbringen auf vorhandenen Leitungsfahrwagen beansprucht. Die Leitungsbremse weist dabei eine Scherenkonstruktion mit zwei zueinander reversibel beweglich angeordneten Haltern auf. Jeder der Halter wiederum weist jeweils eine Bremsbacke auf. In besonderer Weise sollen die beiden Halter mittels eines Antriebs in einer Festlegelage zueinander bewegbar sein. Das bedeutet, dass an einem vorhandenen Antrieb eines Leitungsfahrwagens die Leitungsbremse derart angeschlossen werden kann, als das auf Wunsch des Nutzers die beiden Halter zueinander hin bewegt werden können, um den Leitungsfahrwagen an einer entsprechenden Hochspannungsleitung festzulegen. Dies stellt die Festlegelage dar.

In einer Löselage werden die beiden Halter mittels bspw. eines Zugefederelements voneinander wegbewegt, so dass die Hochspannungsleitung zwischen den beiden Haltern bzw. den beiden Bremsbacken hindurchgleiten kann. Die Leitungsbremse ist derart ausgelegt, dass der Antrieb bspw. ein elektrischer Antrieb, hydraulischer Antrieb, ein pneumatischer Antrieb oder ein Verbrennungsmotor mit hydraulischer, pneumatischer oder elektrischer Translation sein kann. Eine entsprechende Auslegung kann durch den Nutzer vorgegeben werden.

Die Bremsbacken wiederum sind zumindest teilweise aus Gummi, Kunststoff oder Holz ausgeführt. Auch ist eine Mischung der Materialien durchaus denkbar. Ansonsten gelten die für den Leitungsfahrwagen gemachten Ausführungen auch für die Leitungsbremse. Dies gilt insbesondere dann, wenn für die gleichen Merkmale die gleichen Begrifflichkeiten genutzt wurden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine schräge Seitenansicht auf einen erfindungsgemäßen Leitungsfahrwagen;
Figur 2 eine weitere Seitenansicht der Figur 1;
Figur 3 eine vergrößerte Teilansicht eines Teils der Figur 1;
Figur 4 eine Ansicht einer erfindungsgemäßen Leitungsbremse.

### Ausführungsbeispiel

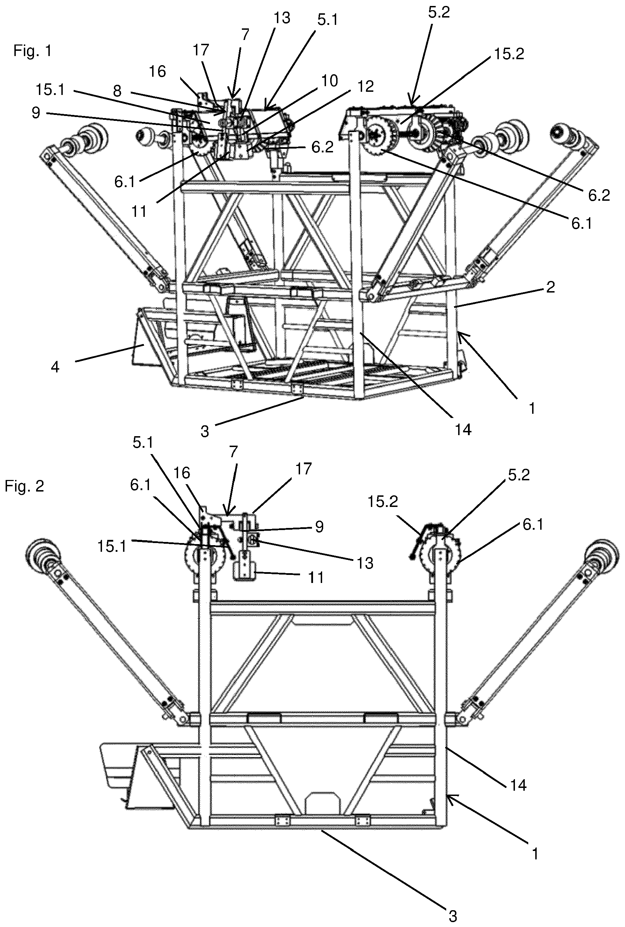

In Figur 1 ist ein Leitungsfahrwagen 1 für eine Hochspannungsleitung gezeigt. Der Leitungsfahrwagen 1 weist einen Rahmen 2 auf. Der Rahmen 2 wiederum bildet einen Boden 3 aus. Um den Boden 3 ist ein Fahrgastkorb 14 aufgebaut.

Weiter ist ein Antrieb 4 vorhanden. Der Antrieb 4 befindet sich in diesem Ausführungsbeispiel endseitig an dem Fahrgastkorb bzw. dem Boden ausgebildet. Der Rahmen 2 bildet nach unten, also in Gebrauchslage an einer Hochspannungsleitung zu einem Untergrund hin den Boden 3 aus. Oben, also weg von dem Boden 3, bildet der Rahmen 2 eine erste Leitungsantriebseinheit 5.1 und eine zweite Leitungsantriebseineit 5.2 aus. In diesem hier gezeigten Ausführungsbeispiel weist lediglich die erste Leitungsantriebseinheit 5.1 eine Leitungsbremse 7 auf. Jede der Leitungsantriebseinheiten 5.1, 5.2 wiederum weist zwei nebeneinander angeordnete Leitungsantriebsrollen 6.1, 6.2 auf.

Die Leitungsbremse 7 besteht aus einer Schwenkhalterung 16, in welcher ein Steg 17 schwenkbar und festlegbar angeordnet ist. die Schwenkhalterung 16 ist einends mit der Leitungsantriebseinheit 5.1 verbunden und weist auch eine Aufnahme für den Steg 17 auf, in welcher der Steg 17 in der hier gezeigten Position weg von dem Boden 3 hochgeschwenkt und ebenfalls manuell oder automatisch festgelegt werden kann. Der Steg 17 wiederum ist hier als ein F-Element ausgeführt, wobei die kürzeren Kanten des F-Elementes in Richtung des Bodens 3 ragt und die längere Kante des F-Elementes in etwa parallel zum Boden 3 angeordnet ist.

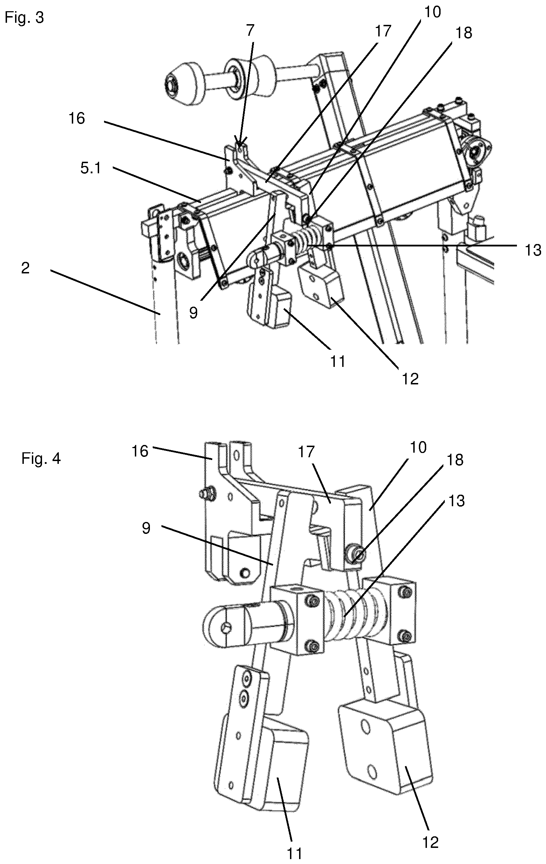

An den kürzeren Kanten des F-Elementes des Steges 17, vielmehr zwischen den zwei kürzeren Kanten ist eine Lagerung 18 vorhanden, wobei in der Lagerung 18 die zwei zueinander oder weg voneinander beweglich angeordneten Halter 9, 10 angebracht sind. Die beiden Halter 9, 10 werden neben der Lagerung 18 noch über ein Zugfederelement 13 miteinander verbunden. Weiter umfasst der Halter 9 die Bremsbacke 11 und der Halter 10 die Bremsbacke 12. Die Einzelheiten der Leitungsbremse 7 lassen sich besser aus der Figur 3 und der Figur 4 erkennen.

In Figur 1 ist weiter gut zu erkennen, dass jede der Leitungsantriebseinheiten 5.1, 5.2 auf der zueinander oder zu einan Mitte des Fahrgastkorbs 14 hinweisenden Seite jeweils eine Plexiglas-Schutzreinrichtung 15.1, 15.2 vorhanden sind.

In der Figur 2 wird auf die in Figur 1 gemachten Ausführungen nochmals Bezug genommen. Eine Wiederholung der bereits gemachten Ausführungen wird vermieden. Es wird lediglich darauf hingewiesen, dass die zur Figur 1 gemachten Ausführungen auch für die Figur 2 gelten sollen. Dies insbesondere dann, wenn die gleichen Merkmale mit den gleichen Bezugsziffern gezeigt sind.

In der Figur 3 ist, wo oben bereits erwähnt, die an der Leitungsantriebseinheit 5.1 angebrachte Leitungsbremse 7 etwas vergrößert und aus einer anderen Position gezeigt. Es handelt sich hierbei um die Löselage, bei der die beiden Halter 9, 10 im Bereich der Bremsbacken 11, 12 voneinander beabstandet sind. Diese beabstandete Position, also die Löselage wird durch das Federelement 13 erreicht. Der Antrieb 4, welcher die Bremsbacken 11, 12 und somit die Endseithalter 9, 10 endseitig, also andernends des Stegs 17 zu einander bewegt ist in der Figur 3 nicht zu erkennen.

Die Figur 4 zeigt nun die Leitungsbremse 7 aus der Figur 3 im ausgebauten Zustand oder im Nachrüstzustand für bestehende Leitungsfahrwagen. Dort wird ebenfalls auf die Wiederholung bereits gemachter Ausführungen zur Figur 3 verzichtet. Es wird lediglich daraus hingewiesen, dass die für die Figur 3 und die übrigen Figuren gemachten Ausführungen auch für die Figur 4 gelten sollen, insbesondere dann wenn die gleichen Merkmale mit den gleichen Bezugsziffern bezeichnet sind.

**Bezugszeichenliste**

| | |
|---|---|
| 1 | Leitungsfahrwagen |
| 2 | Rahmen |
| 3 | Boden |
| 4 | Antrieb |
| 5 | Leitunpsantriebseinheit |
| 6 | Leitunpsantriebsrolle |
| 7 | Leitungsbremse |
| 8 | Scherenkonstruktion |
| 9 | Halter |
| 10 | Halter |
| 11 | Bremsbacke |
| 12 | Bremsbacke |
| 13 | Zupfederelement |
| 14 | Fahrpastkorb |
| 15 | |
| 16 | |
| 17 | |
| 18 | |
| 19 | |
| 20 | |
| 21 | |
| 22 | |
| 23 | |
| 24 | |
| 25 | |
| 26 | |
| 27 | |
| 28 | |
| 29 | |
| 30 | |
| 31 | |
| 32 | |
| 33 | |

## Patentansprüche

1. Leitungsfahrwagen (1) für eine Hochspannungsleitung mit einem Rahmen (2), wobei der Rahmen (2) einen Antrieb (4) aufweist und der Antrieb (4) mit einer Leitungsantriebsrolle (6.1, 6.2) zusammenwirkt, wobei die Leitungsantriebsrolle (6.1, 6.2) an einer Leitungsantriebseinheit (5.1, 5.2) umfasst ist, wobei die Leitungsantriebseinheit (5.1, 5.2) eine Leitungsbremse (7) aufweist, wobei die Leitungsbremse (7) aus einer Scherenkonstruktion (8) mit zwei zueinander reversibel beweglich angeordneten Haltern (9, 10) besteht, wobei jeder der Halter (9, 10) jeweils eine Bremsbacke (11, 12) aufweist,
**dadurch gekennzeichnet, dass**
mittels des Antriebs (4) durch eine Entweder/Oder-Schaltung entweder die Leitungsbremse (7) aktiviert ist oder die Leitungsantriebsrolle (6.1, 6.2) angetrieben ist.

2. Leitungsfahrwagen (1) nach Anspruch 1, **dadurch gekennzeichnet, dass** durch ein Zugfederelement (13) die Leitungsbremse (7) deaktivierbar ist.

3. Leitungsfahrwagen (1) nach einem der vorigen Ansprüche, **dadurch gekennzeichnet, dass** der Antrieb (4) ein elektrischer Antrieb, ein hydraulischer Antrieb, ein pneumatischer Antrieb ist.

4. Leitungsfahrwagen (1) nach einem der vorigen Ansprüche, **dadurch gekennzeichnet, dass** der Antrieb (4) ein Verbrennungsmotor mit hydraulischer, pneumatischer oder elektrischer Translation für die Leitungsbremse (7) ist.

5. Leitungsfahrwagen (1) nach einem der vorigen Ansprüche, **dadurch gekennzeichnet, dass** der Rahmen (2) mindestens zwei Leitungsantriebseinheiten (5.1, 5.2) aufweist, wobei die erste Leitungsantriebseinheit (5.1) die erste Leitungsbremse (7) und die zweite Leitungsantriebseinheit (5.2) die zweite Leitungsbremse umfasst.

6. Leitungsfahrwagen (1) nach Anspruch 5, **dadurch gekennzeichnet, dass** die erste Leitungsbremse (7) relativ zur zweiten Leitungsbremse zeitverzögert aktivierbar und deaktivierbar ist.

7. Leitungsfahrwagen (1) nach einem der vorigen Ansprüche, **dadurch gekennzeichnet, dass** die Leitungsantriebseinheit (5.1, 5.2) mindestens zwei Leitungsantriebsrollen (6.1, 6.2) aufweist.

8. Leitungsfahrwagen (1) nach einem der vorigen Ansprüche, **dadurch gekennzeichnet, dass** die Bremsbacken (11, 12) zumindest teilweise aus Gummi, Kunststoff oder Holz bestehen.

9. Leitungsfahrwagen (1) nach einem der vorigen Ansprüche, **dadurch gekennzeichnet, dass** der Rahmen (2) einen Boden (3) aufweist und der Boden (3) mit einem Fahrgastkorb (14) umfangen ist.

10. Leitungsfahrwagen (1) nach Anspruch 9, dadurch gekennzeichent, dass die Leitungsantriebseinheit (5.1, 5.2) auf der zu einer Mitte des Fahrgastkorbs weisenden Seite eine Plexiglas-Schutzeinrichtung (15.1, 15.2) aufweist und die Leitungsantriebseinheit (5.1, 5.2) einends von dem Rahmen (2) wegklappbar ist.

11. Leitungsbremse (7) für einen Leitungsfahrwagen (1) mit einer Scherenkonstruktion (8) mit zwei zueinander reversibel beweglich angeordneten Haltern (9, 10), wobei jeder der Halter (9, 10) jeweils eine Bremsbacke (11, 12) aufweist,
**dadurch gekennzeichnet, dass**
die beiden Halter (9, 10) mittels eines Antriebs (4) in einer Festlegelage zueinander bewegbar sind.

12. Leitungsbremse nach Anspruch 11, **dadurch gekennzeichnet, dass** die beiden Halter (9, 10) mittels eines Zugfederelements (13) in einer Löselage voneinander wegbewegbar ist.

13. Leitungsbremse nach Anspruch 11 oder 12, **dadurch gekennzeichnet, dass** der Antrieb (4) ein elektrischer Antrieb, ein hydraulischer Antrieb, ein pneumatischer Antrieb ist oder ein Verbrennungsmotor mit hydraulischer, pneumatischer oder elektrischer Translation ist.

14. Leitungsbremse nach einem der Ansprüche 11 bis 13, **dadurch gekennzeichnet, dass** die Bremsbacken (11, 12) zumindest teilweise aus Gummi, Kunststoff oder Holz bestehen.
